# EUROPÄISCHE PATENTSCHRIFT

(11) **EP 2 456 296 B1**
(45) Veröffentlichungstag und Bekanntmachung des Hinweises auf die Patenterteilung: **10.12.2014**
(21) Anmeldenummer: 10734695.9
(22) Anmeldetag: 16.07.2010
(51) Int. Cl.: A01G 17/14, E04H 17/10

(54) **WEINBERGPFAHL**
VINE STAKE
PIQUET DE VIGNE

(30) Priorität: 24.07.2009 DE 102009034661
(43) Veröffentlichungstag der Anmeldung: 30.05.2012
(73) Patentinhaber: Dr. Reisacher Winzerbedarf GmbH, 73765 Neuhausen (DE)
(72) Erfinder: REISACHER, Raimund, 76887 Bad Bergzabern (DE)
(74) Vertreter: Kesselhut, Wolf
(86) Internationale Anmeldenummer: PCT/EP2010/004336
(87) Internationale Veröffentlichungsnummer: WO 2011/009569

(56) Entgegenhaltungen:
- EP-A1- 1 661 451
- DE-A1-102004 007 470
- FR-A1- 2 610 976

## Beschreibung

Die Erfindung betrifft einen Weinbergpfahl gemäß dem Oberbegriff von Anspruch 1.

Für Drahtrahmen im Wein- und Obstbau werden bekanntermaßen offene oder geschlossene Metallprofile verwendet, die an den Schenkeln außenliegende Haken aufweisen, welche durch Ausstanzen und Formbiegen von zungenförmigen Abschnitten aus dem Grundmaterial gebildet werden.

Derartige Metallprofile - die nachfolgend auch als Weinbergpfahls bezeichnet werden - sind beispielsweise aus der DE 44 36 936 C2 bekannt.

Bei dem in der zuvor genannten Schrift beschriebenen Metallprofil ergibt sich das Problem, dass die zungenförmigen Abschnitte technisch bedingt mit Stanzgraten behaftet sind, die dazu führen, dass die Drähte in den durch Biegen der zungenförmigen Abschnitte erzeugten Aufnahmeabschnitten nicht uneingeschränkt gleiten können; bzw. die häufig mit einer Schutzummantelung versehenen Oberflächen der Drähte durch die Stanzgrate beschädigt werden, so dass die Drähte frühzeitig oxidieren.

Die DE 10 2004 007 470 A1 beschreibt einen Weinbergpfahl der eingangs genannten Art, bei dem die zungenförmigen Abschnitte nach dem Ausstanzen von der Stanzöffnung weg in Rückwärtsrichtung zu einem C-förmigen Aufnahmeabschnitt umgebogen und im Anschluss daran durch Abdrücken mit einer Anphasung versehen werden, um ein nach Möglichkeit freies Gleiten der Drähte in den C-förmigen Aufnahmeabschnitten zu ermöglichen. Obgleich die beschriebenen Pfähle ein freies Gleiten der Drähte ermöglichen, ist deren Fertigung sehr aufwändig und zeitintensiv, da das nachträgliche Einbringen der Anphasungen mit einem zusätzlichen Arbeitsschritt verbunden ist, der die Werkzeugkosten erhöht und die gesamte Fertigungszeit um mehr als 30 % verlängert. Zudem gibt die Schrift keinen Hinweis darauf, auch die Außenseiten der C-förmigen Aufnahmeabschnitte für die Drähte mit einer Anphasung zu versehen, um die Stanzgrate ebenfalls in diesen Bereichen zu beseitigen. Diese Stanzgrate auf der Außenseite der C-förmigen Abschnitte können bei der manuellen Traubenemte beim Erntepersonal leicht zu unangenehmen Schnittverletzungen führen und erhöhen den Verschleiß der an Vollerntemaschinen zur automatischen Traubenernte üblicherweise eingesetzten Schlagstäben beträchtlich.

Demgemäß ist es eine Aufgabe der vorliegenden Erfindung, einen Pfahl der eingangs genannten Art sowie ein Verfahren zur Herstellung eines solchen zu schaffen, bei dem fertigungsbedingte Stanzgrate an den Aufnahmeabschnitten auf kostengünstige Art und Weise vermieden werden.

Diese Aufgabe wird erfindungsgemäß durch die Merkmale von Anspruch 1 und 7 gelöst.

Weitere Merkmale sind in den Unteransprüchen beschrieben.

Gemäß der Erfindung besitzt ein Pfahl zum Halten eines Drahtes im Wein- und Obstbau einen Grundkörper mit wenigstens einem Schenkel aus Metallblech, z.B. Stahlblech, an dem ein Haken durch Ausstanzen und Biegen eines sich von einem Zungengrund zu einem freien Ende hin erstreckenden zungenförmigen Abschnitts aus dem Metallblech erzeugt wird. Die beim Stanzvorgang entstehende Stanzkante des zungenförmigen Abschnitts ist im Bereich eines insbesondere C-förmigen Aufnahmeabschnitts für den Draht mit einer Anphasung versehen, die erfindungsgemäß dadurch erzeugt wird, dass eine erste und zweite, der Kontur des zungenförmigen Abschnitts von der Form her entsprechenden Nut von beiden Seiten des Grundkörpers aus in den Grundkörper eingebracht, insbesondere eingeprägt wird. Nach dem Einbringen der beiden Nuten, die im Metallblech übereinanderliegend angeordnet sind und jeweils insbesondere eine im Wesentlichen V-förmige Querschnittsform besitzen, wird der zungenförmige Abschnitt aus dem Grundkörper herausgedrückt. Dabei wird der zwischen dem Nutengrund der ersten Nut und dem Nutengrund der zweiten Nut verbleibende Materialsteg, der bei einem Metallblech mit einer Stärke von 1,5mm lediglich eine Stärke von z.B. 0,1 bis 0,5 mm besitzt, aufgrund seiner sehr geringen Festigkeit mit geringem Kraftaufwand durchbrochen, wenn der zungenförmige Abschnitt zur Formung des Aufnahmeabschnitts aus dem Grundkörper herausgedrückt wird.

Der erfindungsgemäße Weinbergpfahl besitzt den Vorteil, dass sich die Anphasungen am zungenförmigen Abschnitt ohne einen zusätzlichen zeitintensiven Arbeitsschritt und auch ohne den Einsatz von hochpräzisen Stanzwerkzeugen, wie sie insbesondere zum Feinstanzen von Blechen eingesetzt werden, in den zungenförmigen Abschnitt einbringen lassen. Hierbei stellt es einen besonderen Vorteil dar, dass durch Anwendung des erfindungsgemäßen Verfahrens sozusagen zwei Anphasungen an beiden Seiten des zungenförmigen Abschnitts automatisch gleichzeitig erzeugt werden, ohne das es hierzu eines weiteren Arbeitsschritts bedarf.

Bei der bevorzugten Ausführungsform der Erfindung besitzt der Aufnahmeabschnitt einen im Wesentlichen C-formigen Querschnitt, der - ausgehend vom Zungengrund - von der entstehenden Stanzöffnung um mehr als 90 °, bevorzugt um mehr als 180 ° in Rückwärtsrichtung weg gebogen ist, derart, dass der Aufnahmeabschnitt nahezu vollständig außerhalb der Stanzöffnung verläuft. Hierdurch ergibt sich der Vorteil, dass der Aufnahmeabschnitt eine vergleichsweise große Steifigkeit aufweist, so dass dieser durch die Schlagstäbe von Vollerntemaschinen nahezu nicht deformiert wird. Ebenso besteht bei dieser Ausführungsform der Erfindung ebenfalls nicht die Gefahr, dass der zungenförmige Abschnitt durch die Schlageinwirkung der Schlagstäbe von Vollerntemaschinen in die Stanzöffnung zurück gedrückt wird.

Die Anphasung erstreckt sich bevorzugt von einer ersten, dem Draht zugewandten Seite des Aufnahmeabschnitts aus in einem ersten Winkel von insbesondere 45 ° in Richtung einer zweiten Seite des zungenförmigen Abschnitts, die dem Draht abgewandt ist. Hierbei wird der Winkel der Anphasung, d.h. der Fläche, die geneigt zur Innenfläche des zungenförmigen Abschnitts entlang der Kante desselben verläuft, durch den Winkel definiert, den die zugehörigen Schenkel der V-förmigen Nut mit der Innenfläche des zungenförmigen Abschnitts einschließen.

Bei der bevorzugten Ausführungsform der Erfindung ist die umlaufende Kante des zungenförmigen Abschnitts mit einer weiteren Anphasung versehen, die sich von der zweiten Seite des Aufnahmeabschnitts aus in einem zweiten Winkel von bevorzugt ebenfalls 45° in Richtung zur ersten Seite des zungenförmigen Abschnitts hin erstreckt, d.h. im Falle des rückgebogenen Hakens in Richtung zur Innenfläche des Aufnahmeabschnitts hin. Obgleich der erste und der zweite Winkel auch unterschiedliche Größen aufweisen können, wobei die Summe der Winkel im Wesentlichen immer 90° beträgt, ergibt sich durch einen ersten und zweiten Winkel im Bereich von jeweils 45° der Vorteil, dass der Materialsteg im Wesentlichen im Bereich der Mittelebene des zungenförmigen Abschnitts verläuft, wodurch die Tiefe einer jeden der beiden V-förmigen Nuten, und damit die zum Einbringen der Nuten erforderliche Materialdeformation, minimal ist. Die erfindungsgemäße Anordnung des umlaufenden Materialsteges im Bereich der Mittelebene des zungenförmigen Abschnitts ergibt darüber hinaus den weiteren Vorteil, dass der Steg sowohl von der Innenfläche, als auch von der Außenfläche des Aufnahmeabschnitts im Wesentlichen den selben Abstand besitzt. Hierdurch wird gewährleistet dass der Draht zum einen frei auf der Fläche der Anphasung entlang gleiten kann, ohne den Steg zu kontaktieren, und zum anderen der Materialsteg ebenfalls außerhalb der Aufschlagebene der Schlagstäbe von Vollerntemaschinen angeordnet ist, die in diesem Falle durch die Tangente zwischen der außenliegenden Fläche des Aufnahmeabschnitts und der vertikal verlaufenden Kante des Grundkörpers des Weinbergpfahls definiert wird.

Durch das Vorsehen eines erfindungsgemäßen Materialstegs, der die beiden Flächen der Anphasungen trennt, ergibt sich der weitere Vorteil, dass beim Herausdrücken des zungenförmigen Abschnitt eine wohl definierte Abrisskante erzeugt wird, welche es erlaubt, den zungenförmigen Abschnitt ausgehend von seinem freien Ende sukzessive aus dem Grundkörper heraus zu drücken, wodurch sich aufgrund der entstehenden Scherwirkung zwischen den Flächen der ersten und zweiten Anphasung die Kraft, die zum Herausdrücken des Abschnitts benötigt wird, noch einmal in vorteilhafter Weise reduziert.

Nach einem weiteren der Erfindung zugrunde liegenden Gedanken kann die zungenförmige Ausnehmung durch Ausstanzen eines U-förmigen Abschnitts aus dem Grundkörper erzeugt werden. Der dabei entstehende U-förmige Stanzausfall, der bevorzugt eine Breite besitzt, die insbesondere der Dicke des Metallblechs entspricht, kann hierbei durch das gleichzeitige Einbringen zweier z.B. um 1,5 mm oder 2 mm voneinander beabstandeter Nuten auf der Oberseite und Unterseite, d.h. von insgesamt vier bevorzug im Wesentlichen V-formigen Nuten, die sich paarweise einander gegenüberliegen, in das Metallblech erhalten werden. Durch das Einbringen eines U-förmigen freigeschnittenen Abschnitts - oder anders ausgedrückt einer U-förmigen Ausnehmung um den zungenförmigen Abschnitt herum - ergibt sich der Vorteil, dass um den zungenförmigen Abschnitt herum mehr Platz für den Einsatz von Prägewerkzeugen geschaffen wird, mit welchen der zungenförmige Abschnitt im Anschluss an den vorhergehend beschriebenen erfindungsgemäßen Stanzvorgang in seine gewünschte Form gebracht wird. Insbesondere können z.B. durch einen zusätzlichen Prägevorgang während des Umformens des zungenförmigen Abschnitts gewünschten Falls auch noch die verbleibenden Materialstege von den Haken entfernt werden, sofern diese beim Einsatz des erfindungsgemäßen Pfahls als störend erachtet werden sollten.

Nach einem weiteren der Erfindung zugrunde liegenden Gedanken umfasst ein Verfahren zur Herstellung eines erfindungsgemäßen Pfahls das Einbringen einer der Form des zungenförmigen Abschnitts entsprechenden ersten Nut mit einer insbesondere V-förmigen Querschnittsform in die erste Seite des Metallblechs, das Einbringen einer der Form des zungenförmigen Abschnitts entsprechenden zweiten Nut mit einer insbesondere ebenfalls V-förmigen Querschnittsform in die der ersten Seite des Metallblechs gegenüberliegende zweite Seite des Metallblechs, derart, dass die erste und zweite Nut im Wesentlichen deckungsgleich übereinanderliegend im Metallblech angeordnet sind. Im Anschluss daran wird der so erzeugte zungenförmige Abschnitt z.B. durch ein weiteres Verfahren oder Bewegen des Prägewerkzeugs, welches eine der beiden Nuten erzeugt, mit einer zusätzlichen Kraft beaufschlagt, die den zungenförmigen Abschnitt aus dem Metallblech herausgedrückt. Der aus dem Metallblech herausgedrückte zungenförmige Abschnitt wird schließlich in einem oder mehreren sich anschließenden Umformschritten bevorzugt kalt umgeformt, um am zungenförmigen Abschnitt einen insbesondere C-förmigen Aufnahmeabschnitt für den Draht zu bilden.

Das Umformen erfolgt hierbei in vorteilhafter Weise durch den Einsatz von einem oder bevorzugt mehreren nacheinander auf den zungenförmigen Abschnitt einwirkenden Prägewerkzeugen, die diesen während des Profilierens des Metallblechs zum eigentlichen Pfahl in Richtung senkrecht zur Außenfläche des Schenkels sowie in Richtung parallel zu dieser deformieren.

Die Erfindung wird nachfolgend mit Bezug auf die Zeichnungen anhand von bevorzugten Ausführungsformen beschrieben.

In den Zeichnungen zeigen:
- Fig. 1: eine schematische räumliche Darstellung eines erfindungsgemäßen Weinbergpfahls,
- Fig. 2: eine schematische räumliche Seitenansicht einer bevorzugten Ausführungsform eines zurück gebogenen Hakens mit einer S-förmigen Querschnittsform,
- Fig. 3a: eine Querschnittsansicht durch das für die Herstellung des erfindungsgemäßen Weinbergpfahls eingesetzte Metallblech mit einem ebenfalls schematisch angedeuteten Prägewerkzeug auf der Ober- und Unterseite vor dem Einbringen der V-förmigen Nuten,
- Fig. 3b: die Querschnittsansicht von Fig. 3a nach dem Eindrücken der beiden Prägewerkzeuge in das Metallblech,
- Fig. 3c: die Querschnittsdarstellung von Fig. 3b nach dem Auseinanderfahren der beiden Prägewerkzeuge,
- Fig. 3d: eine schematische Querschnittsansicht durch den zungenförmigen Abschnitt nach dem Herausdrücken desselben aus dem Metallblech,
- Fig. 4: eine schematische Aufsicht auf den im Metallblech durch Einprägen der ersten und zweiten V-förmigen Nut definierten zungenförmigen Abschnitt vor dem Herausdrücken desselben,
- Fig. 5: eine vergrößerte Querschnittsansicht des Metallblechs im Bereich der eingebrachten Nuten,
- Fig. 6a: eine schematische Querschnittsansicht der Prägewerkzeuge zum Herausdrücken und Verformen des nach dem erfindungsgemäßen Verfahren erzeugten zungenförmigen Abschnitts mit den daran gebildeten Anphasungen, und
- Fig. 6b: den in einem weiteren Verfahrensschritt in Rückwärtsrichtung umgebogenen zungenförmigen Abschnitt von Fig. 6a zusammen mit den hierzu eingesetzten Prägewerkzeugen.

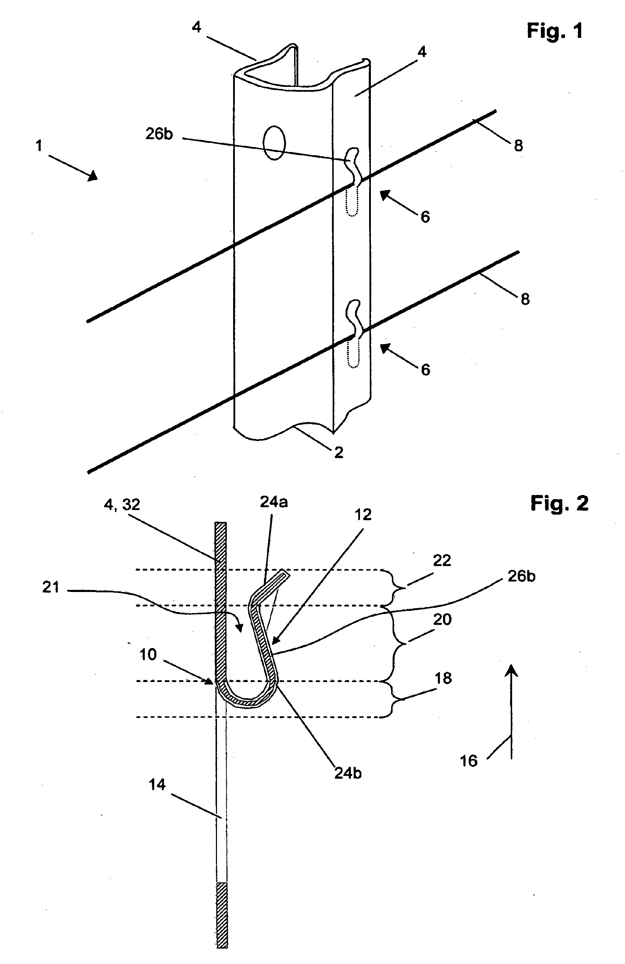

Wie in Fig. 1 gezeigt ist, umfasst ein erfindungsgemäßer Weinbergpfahl 1 einen aus Metallblech 32, insbesondere aus Stahlblech geformten Grundkörper 2, der einen im Wesentlichen U-förmigen Querschnitt mit Schenkeln 4 aufweist, an denen erfindungsgemäße Haken 6 zur Aufnahme von Drähten 8 geformt sind.

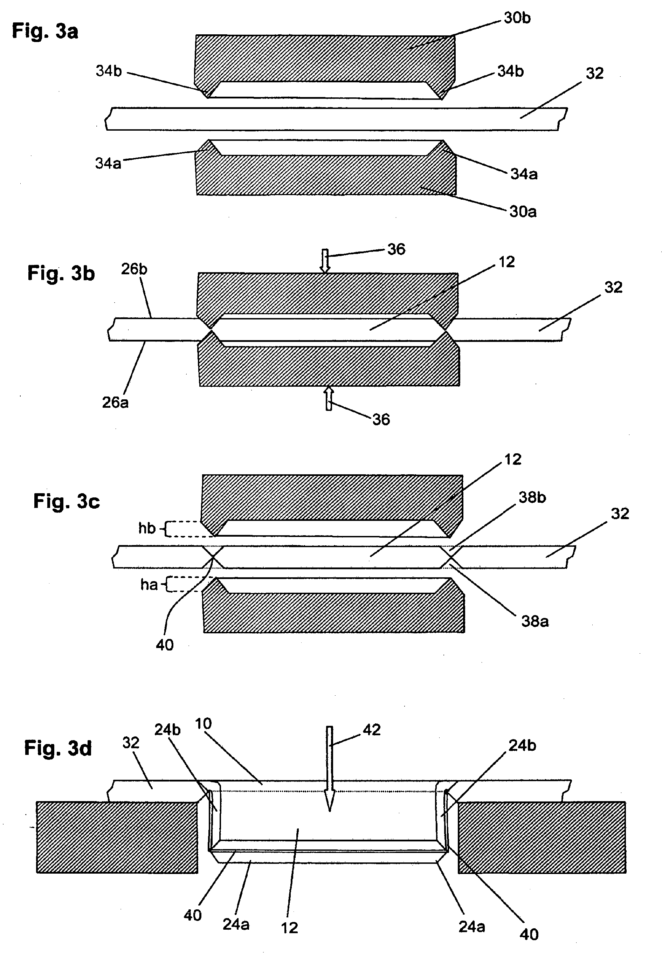

Die Haken 6 werden hierbei gemäß der Darstellung von Fig. 2 durch Stanzen und Biegen eines sich von einem Zungengrund 10 aus zu einem freien Ende hin erstreckenden zungenförmigen Abschnitts 12 aus dem Metallblech 32 erzeugt, worauf nachfolgend in Verbindung mit den Figuren 3a bis 3d noch näher im Detail eingegangen wird. Gemäß der Darstellung von Fig. 2 weist der zungenförmige Abschnitt 12 einen von der entstehenden Stanzöffnung 14 in die durch den Pfeil 16 verdeutlichte Rückwärtsrichtung gebogenen Aufnahmeabschnitt 18 auf, der bei der in Fig. 2 gezeigten Ausführungsform C-förmig ausgestaltet ist.

An den C-förmigen Aufnahmeabschnitt 18 schließt sich weiterhin ein bevorzugt gradliniger, in Richtung auf die Außenfläche des Schenkels 4 zulaufender Führungsabschnitt 20 an, an dessen Ende ein sich von der Außenfläche des Schenkels 4 wegerstreckender Endabschnitt 22 geformt sein kann, der das Einlegen des Drahtes durch die Einlegeöffnung 21 hindurch erleichtert.

Um nach dem Einhängen eines Drahtes 8 in den Aufnahmeabschnitt 18 ein freies Gleiten desselben zu ermöglichen, wird der zungenförmige Abschnitt 12 im Bereich seiner Stanzkante mit einer Anphasung 24a, 24b versehen, die beim Ausstanzen des zungenförmigen Abschnitts in der in den Figuren 3a bis 3d gezeigten Weise erhalten wird.

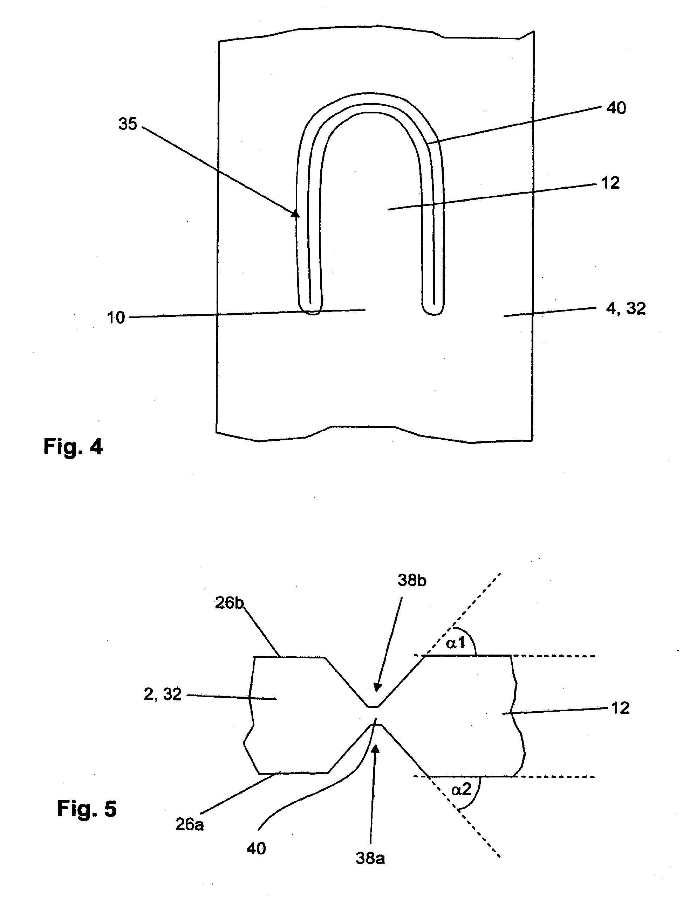

Hierzu wird gemäß der Darstellung 3a ein erstes und ein zweites Prägewerkzeug 30a, 30b von der Unterseite 26a und der Oberseite 26b aus an das bevorzugt ebenflächige Metallblech 32 angestellt. Das erste und bevorzugt auch zweite Prägewerkzeug 30a, 30b besitzt hierbei einen umlaufenden, im Querschnitt dreiecksförmigen Vorsprung 34a, 34b, der sich gemäß der Darstellung von Fig. 4 U-förmig entlang des zungenförmigen Abschnitts 12 erstreckt und der eine Höhe hₐ und h_{b} aufweist, die bevorzugt im Wesentlichen der Hälfte der Materialdicke des Metallsblechs 32 entspricht.

Der Vorsprung 34a und der Vorsprung 34b des ersten bzw. zweiten Prägewerkzeugs 30a, 30b verlaufen hierbei bevorzugt unmittelbar gegenüberliegend zueinander entlang der Außenkante des zungenförmigen Abschnitts 12, wie dies in Fig. 4 in der Aufsicht angedeutet ist.

Wie in Fig. 3b gezeigt ist, werden die beiden Prägewerkzeuge in bekannter Weise durch Beaufschlagen derselben mit einer durch die Pfeile 36 angedeuteten Druckkraft gegeneinander in das Metallblech 32 gepresst, wodurch sich im Bereich der Vorsprünge 34a, 34b das Material des Metallblechs 32 kalt verformt, so dass nach dem in Fig. 3c gezeigten Zurückfahren des ersten und zweiten Prägewerkzeugs 30a, 30b auf der Unterseite 26a und auf der Oberseite 26b des Metallblechs 32 eine umlaufende erste und zweite Nut 38a, 38b entsteht, die bevorzugt im Bereich der Mittelebene des Metallblechs 32 durch einen Materialsteg 40 voneinander getrennt sind.

Obgleich die erste und die zweite Nut 38a, 38b bevorzugt von beiden Seiten aus in das Metallblech 32 eingeprägt werden und dabei im Wesentlichen dieselbe identische V-Form besitzen, ist es ebenfalls möglich, die V-Form der Nuten gegebenenfalls auf der Unterseite 26a und der Oberseite 26b des Metallblechs 32 unterschiedlich zu wählen.

Wie in der Darstellung von Fig. 5 weiterhin gezeigt ist, erstreckt sich die erste Anphasung 24a, die beim abschließend gebogenen Haken 6 im Bereich der Innenseite des Aufnahmeabschnitts 18 angeordnet ist, von der dem Draht zugewandten Innenfläche 26a des Aufnahmeabschnitts - die nachfolgend auch als erste Seite bezeichnet wird - aus in einem ersten Winkel α1 von insbesondere 45 ° in Richtung der gegenüberliegenden Außenfläche 28b des zungenförmigen Abschnitts 12, die nachfolgend auch als zweite, dem Draht 8 abgewandte Seite bezeichnet wird. Hierbei wird der Winkel der Anphasung, d.h. der Fläche, die geneigt zur Innenfläche 26a des zungenförmigen Abschnitts 12 entlang der Außenkante 35 desselben verläuft, durch den Winkel definiert, den die zugehörigen Schenkel der V-förmigen Nut mit der Innenfläche des zungenförmigen Abschnitts einschließen.

In gleicher Weise ist bei der bevorzugten Ausführungsform der Erfindung die umlaufende Außenkante 35 des zungenförmigen Abschnitts 12 mit der zweiten Anphasung 24b versehen, die sich von der Außenfläche 26b des Aufnahmeabschnitts 18 aus - die nachfolgend auch als zweite Seite bezeichnet wird - in einem zweiten Winkel α2 von bevorzugt ebenfalls 45° in Richtung zur zweiten Seite des zungenförmigen Abschnitts 12 hin erstreckt, die im Falle des in den Darstellungen gezeigten rückgebogenen Hakens 6 die Innenfläche 26a des Aufnahmeabschnitts 18 bildet. Obgleich in den Zeichnungen zwischen der Fläche der Anphasungen 24a und 24b wohl definierte Winkel α1 und α2 eingezeichnet sind, kann durch eine entsprechende Formgebung der jeweiligen prägenden Flächen des ersten und/oder zweiten Prägewerkzeugs 30a, 30b der Übergangsbereich zwischen den Flächen 26a, 26b und der zugehörigen Ausnehmung 24a, 24b gewünschten Falls auch einen nicht näher dargestellten Radius von z.B. 0,1 bis 0,5 mm oder auch mehr, aufweisen.

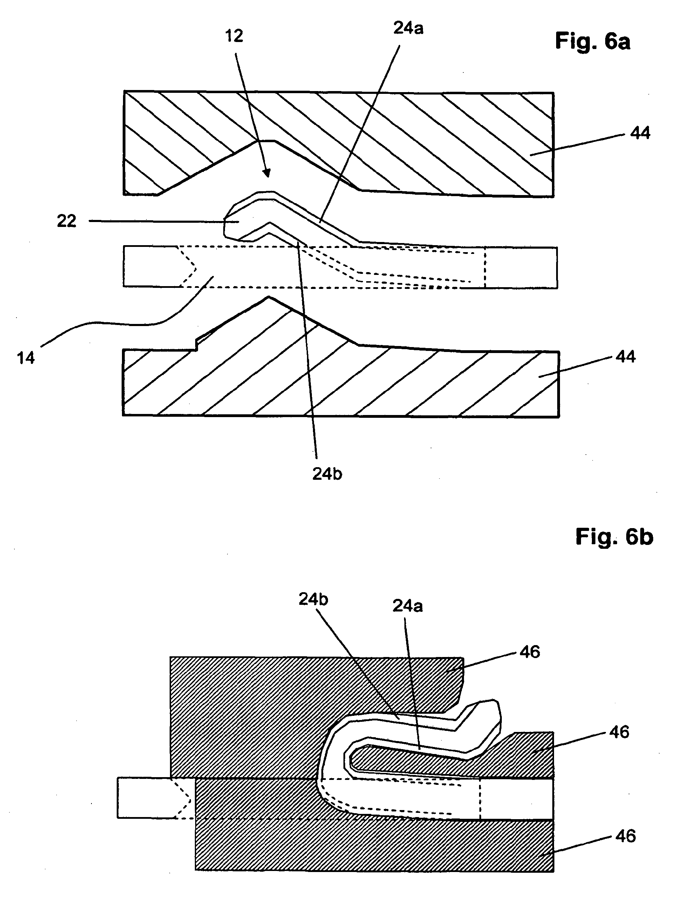

Zur Herstellung des erfindungsgemäßen Pfahls 1 werden in das bevorzugt ebene Metallblech 32 wie zuvor in Verbindung mit den Figuren 3a bis 3c beschrieben, eine erste und zweite Nut 38a und 38b mit der in Fig. 5 im Detail gezeigten V-förmigen Querschnittsform im Wesentlichen deckungsgleich und übereinanderliegend in die erste und zweite Seite 26a des Metallblechs 32 eingeprägt. Der im Bereich des jeweiligen Nutengrundes verbleibende Materialsteg 40, der bei einem Metallblech 32 mit einer üblichen Stärke von 1,5 mm. z.B lediglich eine Stärke im Bereich von 0,2 mm und eine Breite von z.B. 0,5 mm besitzt, wird anschließend durch erneutes Anwenden einer durch den Pfeil 42 angedeuteten Druckkraft auf den zungenförmige Abschnitt 12 aufgebrochen, wenn der zungenförmige Abschnitt 12 aus dem Metallblech 32 herausgedrückt wird, wie dies in Fig. 3d angedeutet ist. Das Herausdrücken des zungenförmigen Abschnitts 12 aus dem Metallblech 32 kann dabei durch ein z.B. in Fig. 6a gezeigtes weiteres Prägewerkzeug 44 erfolgen, welches gleichzeitig mit dem Herausdrücken des zungenförmigen Abschnitts 12 aus der Stanzöffnung 14 auch einen ersten Teil des Aufnahmeabschnitts 18 sowie auch den Endabschnitt 22 formt.

Der aus dem Metallblech 32 herausgedrückte zungenförmige Abschnitt 12 wird schließlich in einem weiteren, in Fig. 6b gezeigten Umformschritt unter Einsatz eines oder mehrerer weiterer geeigneter Prägewerkzeuge 46 bevorzugt kalt umgeformt, um am zungenförmigen Abschnitt einen insbesondere C-förmigen Aufnahmeabschnitt 18 für den Draht 8 zu bilden.

### Liste der Bezugszeichen

- 1: Weinbergpfahl
- 2: Grundkörper
- 4: Schenkel
- 6: Haken
- 8: Draht
- 10: Zungengrund
- 12: zungenförmiger Abschnitt
- 14: Stanzöffnung
- 16: Pfeil
- 18: Aufnahmeabschnitt
- 20: Führungsabschnitt
- 21: Einlegeöffnung
- 22: Endabschnitt
- 24a: Anphasung im Bereich der Innenseite des Aufnahmeabschnitts
- 24b: Anphasung im Bereich der Außenseite des Aufnahmeabschnitts
- 26a: Unterseite des Metallblechs / Innenfläche des Aufnahmeabschnitts
- 26b: Oberseite des Metallblechs / Außenfläche des Aufnahmeabschnitts
- 30a: erstes Prägewerkzeug
- 30b: zweites Prägewerkzeug
- 32: Metallblech
- 34a: erster U-förmig umlaufender Vorsprung
- 34b: zweiter U-förmig umlaufender Vorsprung
- 35: Außenkante des zungenförmigen Abschnitts
- 36: Pfeil
- 38a: erste umlaufende Nut
- 38b: zweite umlaufende Nut
- 40: Materialsteg
- 42: Pfeil
- 44: Prägewerkzeug
- 46: Prägewerkzeug
- α1: Winkel
- α2: Winkel
- ha: Höhe des ersten Vorsprungs
- hb: Höhe des zweiten Vorsprungs

## Patentansprüche

1. Pfahl (1) mit wenigstens einem Haken (6) zum Halten eines Drahtes (8) im Wein- und Obstbau, der einen Grundkörper (2) mit wenigstens einem Schenkel (4) aus Metallblech (32) aufweist, an dem der Haken (6) durch Ausstanzen und Biegen eines sich von einem Zungengrund (10) zu einem freien Ende hin erstreckenden zungenförmigen Abschnitts (12) aus dem Metallblech (32) erzeugt wird, wobei der zungenförmige Abschnitt (12) im Bereich eines Aufnahmeabschnitts (18) für den Draht (8) mit einer Anphasung (24a, 24b) versehen ist,
**dadurch gekennzeichnet,**
**dass** die Anphasung (24a, 24b) durch Einbringen einer ersten und zweiten, der Kontur des zungenförmigen Abschnitts (12) von der Form her entsprechenden Nut (38a, 38b) mit einer insbesondere V-förmigen Querschnittsform in den Grundkörper (2) und Herausdrücken des zungenförmigen Abschnitts (12) aus dem Grundkörper (2) erhalten wird.

2. Pfahl nach Anspruch 1,
**dadurch gekennzeichnet,**
**dass** der Aufnahmeabschnitt(18) einen im Wesentlichen C-förmigen Querschnitt besitzt und ausgehend vom Zungengrund (10) von der entstehenden Stanzöffnung (14) weg um mehr als 90 °, bevorzugt um mehr als 180 ° in Rückwärtsrichtung (16) gebogen ist, derart, dass der Aufnahmeabschnitt (18) sich im Wesentlichen außerhalb der Stanzöffnung (14) über dem Schenkel (4) des Grundkörpers (2) erstreckt.

3. Pfahl nach einem der vorhergehenden Ansprüche,
**dadurch gekennzeichnet,**
**dass** die Anphasung (24a, 24b) sich von einer ersten, dem Draht (8) zugewandten Seite (26a) des Aufnahmeabschnitts (18) aus in einem Winkel (α1) von insbesondere 45 ° in Richtung zu einer zweiten, dem Draht abgewandten Seite des Aufnahemabschnitts (18) erstreckt.

4. Pfahl nach Anspruch 3,
**dadurch gekennzeichnet,**
**dass** der Aufnahmeabschnitt (18) mit einer weiteren Anphasung (4b) versehen ist, die sich von der zweiten Seite (26b) des Aufnahmeabschnitts (18) aus in einem Winkel (α2) von insbesondere 45° in Richtung zur ersten Seite (26a) des Aufnahmeabschnitts (18) hin erstreckt.

5. Pfahl nach Anspruch 4,
**dadurch gekennzeichnet,**
**dass** die Flächen der Anphasungen (24a, 24b) durch einen Materialsteg (40) voneinander getrennt sind.

6. Pfahl nach einem der vorhergehenden Ansprüche ,
**dadurch gekennzeichnet,**
**dass** die zungenförmige Ausnehmung (14) durch Ausstanzen eines U-förmigen Abschnitts aus dem Grundkörper (2) erzeugt wird, der eine Breite besitzt, die insbesondere der Dicke des Metallblechs (32) entspricht.

7. Verfahren zur Herstellung eines Pfahls (1) mit wenigstens einem Haken zum Halten eines Drahtes (8) im Wein- und Obstbau, der einen Grundkörper (2) mit wenigstens einem Schenkel (4) aus Metallblech (32) aufweist, an dem der Haken (6) durch Ausstanzen und Biegen eines sich von einem Zungengrund (10) aus zu einem freien Ende hin erstreckenden zungenförmigen Abschnitts (12) aus dem Metallblech erzeugt wird, und der zungenförmige Abschnitt (12) mit einer Anphasung (24a, 24b) versehen ist, nach einem der vorhergehenden Ansprüche,
**gekennzeichnet durch** die folgenden Verfahrensschritte:
Einbringen einer der Form des zungenförmigen Abschnitts (12) entsprechenden ersten Nut (38a) mit einer insbesondere V-förmigen Querschnittsform in die erste Seite (26a) des Metallblechs (32),
Einbringen einer der Form des zungenförmige Abschnitts (12) entsprechenden zweiten Nut (38b) mit einer insbesondere V-förmigen Querschnittsform in die der ersten Seite (26a) des Metallblechs (32) gegenüberliegende zweite Seite (26b) des Metallblechs (32), derart, dass die erste und zweite Nut (38a, 38b) im Wesentlichen deckungsgleich übereinanderliegend im Metallblech (32) angeordnet sind,
Beaufschlagen des zungenförmigen Abschnitts (12) mit einer solchen Kraft (42), dass dieser aus dem Metallblech (32) herausgedrückt wird, und
Umformen des zungenförmigen Abschnitts (12) zu einem Aufnahmeabschnitt (18) für den Draht (8).

8. Verfahren nach Anspruch 7,
**dadurch gekennzeichnet,**
**dass** das Formen des zungenförmigen Abschnitts (12) durch mehrere nacheinander in Richtung senkrecht zur Außenfläche des Grundkörpers (2) und/oder in Richtung parallel hierzu auf den zungenförmigen Abschnitt (12) einwirkende Prägewerkzeuge (44, 46) erfolgt.

## Claims

1. A stake (1) with at least one hook (6) for retaining a wire (8) in the wine- and fruit-growing industry, said stake having a basic body (2) with at least one leg (4) which is made of metal sheet (32) and on which the hook (6) is produced by punching and bending out of the metal sheet (32) a tongue-shaped portion (12) which extends from a tongue base (10) toward a free end, the tongue-shaped portion (12) being provided with a chamfer (24a, 24b) in the region of a receiving portion (18) for the wire (8),
**characterized in that**
the chamfer (24a, 24b) is obtained by incorporating into the basic body (2) a first and second groove (38a, 38b) which correspond in shape to the contour of the tongue-shaped portion (12) and which have an in particular V-shaped cross-sectional shape, and pressing the tongue 12 shaped portion (12) out of the basic body (2).

2. The stake as claimed in claim 1,
**characterized in that**
the receiving portion (18) has a substantially C-shaped cross section and, proceeding from the tongue base (10) away from the resulting punched opening (14), is bent by more than 90°, preferably by more than 180°, in the rearward direction (16) such that the receiving portion (18) extends substantially outside the punched opening (14) over the leg (4) of the basic body (2).

3. The stake as claimed in one of the preceding claims,
**characterized in that**
the chamfer (24a, 24b) extends from a first side (26a) of the receiving portion (18) that faces the wire (8) at an angle (α1) of in particular 45° in the direction of a second side of the receiving portion (18) that faces away from the wire.

4. The stake as claimed in claim 3,
**characterized in that**
the receiving portion (18) is provided with a further chamfer (4b) which extends from the second side (26b) of the receiving portion (18) at an angle (α2) of in particular 45° in the direction of the first side (26a) of the receiving portion (18).

5. The stake as claimed in claim 4,
**characterized in that**
the surfaces of thechamfers (24a, 24b) are separated from one another by a material web (40).

6. The stake as claimed in one of the preceding claims,
**characterized in that**
the tongue-shaped aperture (14) is produced by punching out of the basic body (2) a U-shaped portion which has a width corresponding in particular to the thickness of the metal sheet (32).

7. A method for producing a stake (1) with at least one hook for retaining a wire (8) in the wine- and fruit-growing industry, said stake having a basic body (2) with at least one leg (4) which is made of metal sheet (32) and on which the hook (6) is produced by stamping and bending out of the metal sheet a tongue-shaped portion (12) which extends from a tongue base (10) toward a free end, and the tongue4shaped portion (12) is provided with a chamfer (24a, 24b), as claimed in one of the preceding claims,
**characterized by** the following method steps:
incorporating into the first side (26a) of the metal sheet (32) a first groove (38a) which corresponds to the shape of the tongue-shaped portion (12) and which has an in particular V-shaped cross-sectional shape, incorporating into the second side (26b) of the metal sheet (32), which is on the opposite side to the first side (26a) of the metal sheet (32), a second groove (38b) which corresponds to the shape of the tongue-shaped portion (12) and which has an in particular V-shaped cross-sectional shape, such that the first and second groove (38a, 38b) are arranged in the metal sheet (32) so as to lie substantially congruently one above the other, applying such a force (42) to the tongue-shaped portion (12) that it is pressed out of the metal sheet (32), and forming the tongue-shaped portion (12) into a receiving portion (18) for the wire (8).

8. The method as claimed in claim 7,
**characterized in that**
the tongue-shaped portion (12) is shaped by means of a plurality of stamping tools (44, 46) which act successively on the tongue-shaped portion (12) in a direction perpendicular to the outer surface of the basic body (2) and/or in a direction parallel thereto.

## Revendications

1. Piquet (1) comprenant au moins un crochet (6) destiné à maintenir un fil (8) en viticulture et dans la culture fruitière, lequel piquet présente un corps de base (2) muni au moins d'un montant (4) en tôle métallique (32), sur lequel montant le crochet (6) est réalisé par découpe et pliage dans la tôle métallique (32) d'une section (12) en forme de languette s'étendant d'un fond de languette (10) vers une extrémité libre, la section (12) en forme de languette étant ménagée dans la zone d'une section de logement (18) du fil (8) munie d'un biseau (24a, 24b),
**caractérisé en ce**
**que** le biseau (24a, 24b) est obtenu en effectuant une première et une deuxième rainures (38a, 38b) correspondant quant à la forme au contour de la section (12) en forme de languette, ayant une forme de section transversale notamment en forme de V dans le corps de base (2) et en pressant la section (12) en forme de languette pour la faire sortir du corps de base (2).

2. Piquet selon la revendication 1,
**caractérisé en ce**
**que** la section de logement (18) possède une section transversale essentiellement en forme de C et est pliée de plus de 90°, de préférence de plus de 180° en sens arrière (16) en partant du fond de languette (10) et en s'éloignant de l'ouverture de découpe créée (14), de manière à ce que la section de logement (18) s'étende essentiellement à l'extérieur de l'ouverture de découpe (14) au-dessus du montant (4) du corps de base (2).

3. Piquet selon l'une quelconque des revendications précédentes,
**caractérisé en ce**
**que** le biseau (24a, 24b) s'étend d'un premier côté (26a) de la section de logement (18), tourné vers le fil (8), dans une angle (α1) de notamment 45° en direction allant vers une deuxième section de logement (18) détournée du fil.

4. Piquet selon la revendication 3,
**caractérisé en ce**
**que** la section de logement (18) est munie d'un biseau supplémentaire (4b) qui s'étend du deuxième côté (26b) de la section de logement (18) dans un angle (α2) de notamment 45° en direction du premier côté (26a) de la section de logement (18).

5. Piquet selon la revendication 4,
**caractérisé en ce**
**que** les surfaces des biseaux (24a, 24b) sont séparées l'une de l'autre par une nervure en matériau (40).

6. Piquet selon l'une quelconque des revendications précédentes, **caractérisé en ce**
**que** l'évidement (14) en forme de languette est réalisé par découpe d'une section en forme de U dans le corps de base (2), laquelle possède une largeur qui correspond notamment à l'épaisseur de la tôle métallique (32).

7. Procédé de fabrication d'un piquet (1) comprenant au moins un crochet destiné à maintenir un fil (8) en viticulture et dans la culture fruitière, lequel piquet présente un corps de base (2) muni au moins d'un montant (4) en tôle métallique (32), sur lequel montant le crochet (6) est réalisé par découpe et pliage dans la tôle métallique d'une section (12) en forme de languette s'étendant d'un fond de languette (10) vers une extrémité libre, la section (12) en forme de languette étant munie d'un biseau (24a, 24b),
**caractérisé par** les étapes de procédé suivantes :
réalisation d'une première rainure (38a) correspondant à la forme de la section (12) en forme de languette, ayant une forme de section transversale notamment en forme de V, dans le premier côté de la tôle métallique (32),
réalisation d'une deuxième rainure (38b) correspondant à la forme de la section (12) en forme de languette, ayant une forme de section transversale notamment en forme de V, dans le deuxième côté (26b) de la tôle métallique (32), opposé au premier côté (26a) de la tôle métallique (32), de manière à ce que la première et la deuxième rainures (38a, 38b) soient disposées essentiellement en coïncidant l'une sur l'autre dans la tôle métallique (32),
apport d'une force (42) sur la section (12) en forme de languette telle que celle-ci soit pressée hors de la tôle métallique, et
déformation de la section (12) en forme de languette pour obtenir une section de logement (18) pour le fil (8).

8. Procédé selon la revendication 7,
**caractérisé en ce**
**que** le formage de la section (12) en forme de languette est réalisé au moyen de plusieurs outils d'estampage (44, 46) agissant sur la section (12) en forme de languette, l'un après l'autre en direction perpendiculaire à la surface extérieure du corps de base (2) et/ou en direction parallèle à celle-ci.
